# EUROPÄISCHE PATENTSCHRIFT

(11) **EP 2 708 967 B1**
(45) Veröffentlichungstag und Bekanntmachung des Hinweises auf die Patenterteilung: **27.04.2016**
(21) Anmeldenummer: 12075110.2
(22) Anmeldetag: 13.09.2012
(51) Int. Cl.: G05B 19/418, G05B 19/042

(54) **DEZENTRALE ELEKTRISCHE STELLVORRICHTUNG**
DECENTRALIZED ELECTRIC ACTUATING DEVICE
DISPOSITIF D'ACTIONNEMENT ÉLECTRIQUE DÉCENTRALISÉ

(43) Veröffentlichungstag der Anmeldung: 19.03.2014
(73) Patentinhaber: Sacharowitz, Fabian, 10777 Berlin (DE); Sacharowitz, Axel, 10829 Berlin (DE)
(72) Erfinder: Sacharowitz, Fabian, 10777 Berlin (DE); Sacharowitz, Axel, 10829 Berlin (DE); Sacharowitz, Steffen, 10967 Berlin (DE)

(56) Entgegenhaltungen:
- EP-A1- 2 318 892
- DE-A1-102006 062 479
- DE-A1-102007 048 476
- US-A1- 2004 134 665
- 3s Antriebe Gmbh: "Schachtlose dezentrale Antriebslösungen für erdverlegte Armaturen", , 1. Januar 2011 (2011-01-01), XP055052392, Industriearmaturen Gefunden im Internet: URL:http://www.3s-antriebe.de/wp-content/u ploads/2013/01/2732057_P_D_3S_Antriebe_IA0 1_11.pdf [gefunden am 2013-02-05]
- Ettex Gmbh Pressebüro: "Die Berliner ettex GmbH ermöglicht 3S-Antriebe erste vollständig autarke Automatisierung von Armaturen", , 24. September 2010 (2010-09-24), XP55052446, Gefunden im Internet: URL:http://www.ettex.biz/fileadmin/Presse/ PI ettex fuer 3S-Antriebe IFAT.pdf [gefunden am 2013-02-05]

## Beschreibung

Die vorliegende Erfindung betrifft eine dezentrale elektrische Stellvorrichtung für Armaturen in Netzen der Wasser-, Gas-, Fernwärme und Fernkälteversorgung, der Abwasserentsorgung sowie in Transportleitungen für Öl und Gas.

### Einleitung

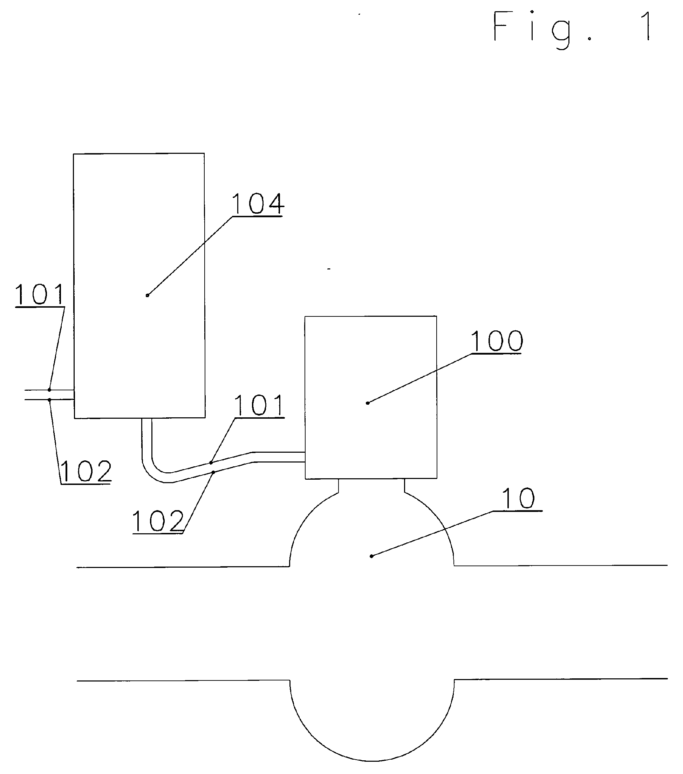

Es ist im Stand der Technik bekannt, elektrische Stellantriebe für Armaturen kabelgestützt mit elektrischer Energie zu versorgen (101). Ein solcher herkömmlicher Stellantrieb (100) ist in Fig.1 schematisch gezeigt. Eine Fernsteuerung ist hierbei kabelgestützt entweder analog über 4...20 mA oder digital über Feldbus-Systeme (102), beispielsweise Profibus, Modbus oder CAN-Bus möglich. Erforderlich ist bei digitaler Ansteuerung neben dem Stellantrieb eine externe Steuereinheit (SPS) (104), mit der der Stellantrieb über eine digitale Schnittstelle, beispielsweise eine RS232 oder RS485 verbunden ist. Die SPS übernimmt die direkte Kommunikation mit einer zentralen Kommunikationseinheit (20), die üblicherweise mit einem Leitstand verbunden ist.

Für die Automatisierung von Armaturen in Netzen der Wasser-, Gas-, Fernwärme- und Fernkälteversorgung, der Abwasserentsorgung sowie in Transportleitungen für Öl und Gas fehlt es häufig an der Verfügbarkeit eines Strom- und/ oder Kommunikationsanschlusses für einen Stellantrieb. Anders als bei Stellantrieben in der Prozesstechnik oder auf Werksgeländen lassen die Kosten für das Verlegen von Kabeln für Strom und/oder Kommunikation in Flächennetzen die Vorteile einer Automatisierung vielfach nicht rechtfertigen. In der Folge sind Armaturen in Versorgungsnetzen in der Fläche auch heute noch weitgehend nicht automatisiert, sondern müssen manuell oder semi-automatisch gestellt werden.

Es ist im Stand der Technik zwar bekannt, die Kommunikation zwischen der externen Steuereinheit (104) und einer zentraler Kommunikationseinheit kabellos etwa über GSM/GPRS, Richtfunk oder W-LAN durchzuführen. Dabei bleibt es aber bei der Notwendigkeit einer Stromversorgung über eine Stromleitung (101), da der kontinuierliche Energieverbrauch von Stellantrieb (100) und externen Steuereinheit (104) nicht mit wirtschaftlich vertretbar dimensionierten dezentralen Energiewandlern oder Akkumulatoren bereitgestellt werden kann.

Daher besteht ein Bedürfnis, dezentrale Stellantriebe zu schaffen, d.h. Stellantriebe, die ohne Strom und / oder Kommunikationskabel betreiben werden können.

Die Schrift EP0639737 versucht, einen dezentralen Antrieb zu schaffen, indem eine erdverlegte Armatur durch einen hydraulischen oder pneumatischen Antrieb gestellt wird. Dieser Antrieb kann kabellos gesteuert und dessen Steuereinheit über Solarzellen versorgt werden. Elektrische Stellantriebe sind jedoch kostengünstiger, weniger kompliziert und deutlich weniger wartungsanfällig. Die dezentrale Energieversorgung per Solarzelle in der EP0639737 schafft es lediglich, den elektrischen Verbrauch für die Endabschalter und die Stellventile bereitzustellen. Sie ist jedoch nicht in der Lage, die für einen hydraulischen oder pneumatischen Antrieb erforderlichen Pumpen oder aber einen elektrischen Stellantrieb zu versorgen.

Das Dokument US 2004/134665 A1 betrifft ein Produktionssystem zur Gasförderung aufweisend einen Stellglied für ein Bohrlochkopfventil sowie eine lokale Energieversorgung und eine lokale Steuerung mit einer Kommunikationseinheit zur bidirektionalen drahtlosen Kommunikation mit einer Leitstelle, wobei der Stellglied eingerichtet ist, in einem Schlafmodus, in dem er keine elektrische Energie verbraucht und einem aktiven Modus zu arbeiten.

Das Dokument DE 10 2006 062479 A1 offenbart ein Verfahren zum Betreiben eines autonomen Feldgerätes der Prozessmesstechnik, das eine interne Spannungsversorgung aufweist und das über eine Funkverbindung über GSM oder Satellit mit einer übergeordneten Einheit kommuniziert, wobei das Feldgerät überwiegend in einem Energiesparmodus betrieben wird, in dem es von der übergeordneten Einheit nicht angesprochen werden kann. Periodisch wird das Feldgerät in einem Aktivmodus überführt, in dem ein Zugriff und Datenaustausch mit der übergeordneten Einheit S1 möglich ist.

Die Erfinder des vorliegenden dezentralen Antriebs haben erkannt, dass der praktisch bedeutsame Fall des Stellbetriebs in Versorgungsleitungen zwar hohe Spitzenleistungen erfordert, jedoch im Gegensatz zum sogenannten Regelbetrieb, bei dem ein Ventil kontinuierlich nach einer bestimmten Stellgröße regelt, im Wesentlichen die meiste Zeit auf Stellbefehle warten, da der Antrieb nur in bestimmten Situationen die Leitung sperren bzw. öffnen muss. Im Stellbetrieb stehen Antrieb und Armatur also die weit überwiegende Zeit still. Typische Stellhäufigkeiten bewegen sich im Bereich weniger Male im Monat. Weiterhin haben die Erfinder erkannt, dass ein elektrischer Stellantrieb mit Gleichstrom-Motoren mit hohem Wirkungsgrad, vorzugsweise 60% oder höher, Planentengetrieben und einer energieeffizient konstruierten internen Steuerungselektronik kombiniert mit einer Kommunikationseinheit für kabellose Kommunikation, wie z.B. einem Modem, ideal für einen Akkubetrieb geeignet ist, auch weil ein solcher Aufbau ohne externe Kommunikationseinheit (104) auskommen kann. Ein solcher dezentraler Antrieb der Erfinder ist beispielsweise im Artikel "3S Antriebe - innovative Antriebslösungen aus Berlin" von H. Friedemann, erscheinen in Kommunalwirtschaft 09/2010, S.660 ff., beschrieben. Nachteil des dort beschriebenen dezentralen Stellantriebs ist, dass auch hier bei einer wirtschaftlich sinnvollen Dimensionierung der Akkus nur eine begrenzte Standby-Zeit gewährleistet ist. Denn auch eine besonders energieeffizient konstruierte Steuerung samt kabelloser Kommunikationseinheit die auch für die Kommunikation über die im Anwendungsfall z. T. großen Distanzen zur nächsten Antenne geeignet sind, benötigt für die permanente Aufrechterhaltung der Kommunikation über einen praxisrelevanten Zeitraum von über einen Monat unwirtschaftlich große Akkukapazitäten. Dies gilt umso mehr wenn zusätzlich die mittlere Stellenergie für die erfindungsrelevanten Armaturen in den genannten Versorgungsleitungen dazu kommt. Diese Lösung eignet sich deshalb vor allem dort, wo die Akkus häufig nachgeladen werden können oder wo die Akkustromversorgung nur als Sicherheitsanwendung neben einer Energieversorgung über einen Stromnetzanschluss zum Einsatz kommt. Obwohl die in dem Artikel "3S Antriebe - innovative Antriebslösungen aus Berlin" von H. Friedemann, erscheinen in Kommunalwirtschaft 09/2010, S.660 ff., bereits eine deutlich Verbesserung gegenüber den bisherigen Ansätzen darstellt, haben es sich die Erfinder zur Aufgabe gesetzt, den Einsatz dezentraler Stellantriebe für Armaturen in Netzen der Wasser-, Gas-, Fernwärme und Fernkälteversorgung, der Abwasserentsorgung sowie in Transportleitungen für Öl und Gas wirtschaftlich und praxistauglich zu machen. Gelöst wird diese Aufgabe durch einen dezentralen Stellantrieb mit den in Anspruch 1 beschriebenen Merkmalen, sowie ein Verfahren gemäß Anspruch 18. Die abhängigen Ansprüche enthalten zweckmäßige Weiterbildungen.

Die Erfinder konnten die Aufgabe durch die folgende überraschende Erkenntnis lösen: Ein Großteil des Energiebedarfs ist im Stellbetrieb auf die Aufrechterhaltung der Kommunikation und den Verbrauch der Steuerungselektronik zurückzuführen. Durch diese Erkenntnis wurden die Erfinder zur Suche nach einer Möglichkeit veranlasst, den Standby Verbrauch des Stellantriebes auf weniger als 5 Watt, insbesondere weniger als 100 mW und besonders bevorzugt 15 mW elektrischer Leistung zu reduzieren. Dadurch wird bei Kombination mit einer Kommunikationseinheit zur kabellosen Datenübertragung ein vollständig dezentraler, d. h. kabelloser, Stellbetrieb bei jederzeitiger Erreichbarkeit über einen Zeitraum von mehreren Monaten ermöglicht, ohne unverhältnismäßig große Akkukapazitäten installieren zu müssen oder unwirtschaftlich kurze Aufladeintervalle in Kauf zu nehmen.

Alternativ wird bereits mit den typischerweise geringen elektrischen Leistungen wirtschaftlich vertretbar dimensionierter lokaler Energiewandler ein vollständig energieautarkes System zur Automatisierung der erfindungsrelevanten Armaturen möglich.

Der niedrige Standby Verbrauch der Vorrichtung wird erreicht, in dem die herkömmlichen elektrischen Komponenten des Stellantriebs komplett spannungs- bzw. stromlos geschaltet werden, wenn gerade keine Stellanforderung bearbeitet werden muss (Standby). Damit der Stellantrieb weiterhin jederzeit erreichbar ist, kann entweder die Steuerungseinheit von sich aus in vorbestimmten Intervallen aufwachen und über die Kommunikationseinheit nach Stellsignalen fragen, oder die Steuerungseinheit kann so eingerichtet sein, dass sie bei Empfang eines vorbestimmten Wecksignals - bspw. eines sogenannten Paging Rufes - durch die Kommunikationseinheit vom Standby Betrieb in den aktiven Betrieb schaltet, in dem sie die Stellanforderungen durchführen kann.

Die Stellvorrichtung wird durch die Steuerungseinheit wieder in den Standby-Betrieb geschaltet, wenn gewisse vorbestimmte Bedingungen erfüllt sind. So kann eine solche Bedingung z.B. ein explizites "Schlafsignal" sein, dass von der Kommunikationseinheit empfangen wird, oder aber die Steuereinheit schaltet in den Standby-Betrieb, wenn die Stellvorrichtung eine vorbestimmte Zeit im aktiven Betrieb war, ohne dass ein Steuersignal an der Kommunikationseinheit anlag.

In der alternativen Ausgestaltung, dass die Kommunikationseinheit periodisch nach Steuerbefehlen fragt, sollte die Funkstilleperiode zwischen zwei Abfrage kurz gehalten werden, um eine gute Erreichbarkeit zu gewährleisten. Andererseits vermindert eine kurze Funkstilleperiode natürlich die Akkustandzeit.

Daher ist es besonders bevorzugt, wenn die Steuereinheit eingerichtet ist, beim Anliegen eines vorbestimmten Signals an der Kommunikationseinheit vom Standby Betrieb in den aktiven Betrieb umzuschalten. So lässt sich die Akkustandzeit weiter erhöhen, ohne die Erreichbarkeit der Stellvorrichtung einzuschränken.

Beide Alternativen führen dazu, dass in den im Stellbetrieb typischerweise langen Intervallen zwischen zwei Stellanforderung durch die Aufrechterhaltung der Kommunikation im Standby Betrieb nicht zu viel Energie verbraucht wird. So können Akkustandzeiten auch bei wirtschaftlich vertretbarer Kapazität des Akkus im realistischen und praktisch relevanten Stellbetrieb von mehreren Monaten bis zu über einem Jahr erzielt werden. Hierdurch wird die dezentrale Automatisierung von Armaturen in Versorgungsnetzen ohne unvertretbar hohe Kosten ermöglicht. Bereits eingebaute Armaturen könne auch wirtschaftlich mit erfindungsgemäßen dezentralen Stellvorrichtungen nachgerüstet werden.

Die Akkus können entweder bei Entleerung periodisch durch Personal nachgeladen bzw. getauscht werden. Oder die Akkus können durch eine Aufladeeinheit in Form eines dezentralen Energiewandlers fortwährend wieder aufgeladen werden. Dabei ist im Gegensatz zum Stand der Technik mit der hier vorgestellten Erfindung im Stellbetrieb ein vollständig autarker Betrieb ohne Nachladen bzw. Tausch der Akkus durch Personal auch bei wirtschaftlich vertretbarer Dimensionierung dezentralen Energiewandlers möglich. Wenn die Aufladeeinheit als dezentralen Energiewandler einen thermoelektrischen Generator und/oder ein Solarpanel und/oder ein Windgenerator und/oder einen Generator, der die Bewegungsenergie des Mediums in der Rohrleitung in elektrische Energie wandeln kann, und/oder eine Brennstoffzelle aufweist, kann auf kostengünstige und effiziente Weise der Energieverbrauch der hier beschriebenen Stellvorrichtung bereitgestellt werden, ohne dass es einer zusätzlichen Nachladung der Akkus bedürfte. Alternativ können die Nachladeintervalle des Akkus bereits bei sehr geringen Ladeleistungen signifikant verlängert werden wenn die Aufladeeinheit nicht so dimensioniert ist, dass sie den gesamten Stromverbrauch der Stellvorrichtung im Mittel abdeckt. Allerdings wird es als besonders vorteilhaft angesehen, dass bei erfindungsgemäßer Stellvorrichtung ein dezentraler Energiewandler nicht zwingend nötig ist, um einen dezentralen Betrieb mit praxistauglichen Intervallen zwischen zwei Nachladungen zu ermöglichen.

Als Kommunikationseinheit (4) eignet sich ein programmierbares oder auch nicht programmierbares GSM Modem, insbesondere ein GSM Modem, welches geeignet für den paketorientierten Dienst ist oder ein (programmierbares) UMTS Modem oder LTE Modem. Besonders geeignete Akkumulatoren sind beispielsweise Lithium-Ionen-Akkumulatoren mit geringer Selbstentladung von weniger als 20% pro Monat, bevorzugt weniger als 5% pro Monat und besonders bevorzugt weniger als 1% pro Monat bei 20 Celsius. Die vorzugsweise geringe Selbstentladung erhöht ebenso wie die geringe Standby-Leistungsaufnahme oder die optionale konstante Energienachführung durch dezentrale Energiewandler die Standzeiten.

Eine Aufladeeinrichtung, die eine Puffereinrichtung umfasst, welche eingerichtet ist, Energie zum Aufladen des Akkumulators zu speichern und gepulst mit ausreichend hohen Ladeströmen an den Akkumulator abzugeben, erlaubt es, auch Li-Ionen Akkumulatoren nachzuladen, selbst wenn die dezentralen Energiewandler nur kleine Ladeströme bereitstellen können.

Durch die Architektur des Antriebes und des Kommunikationsablaufes kann der Energieverbrauch der Stellvorrichtung im Standby-Betrieb kleiner als 5 Watt, bevorzugt kleiner als 1 Watt, besonders bevorzugt kleiner als 50 Milli-Watt und im optimalen Fall unter 15 mW liegen. Damit sind ausreichend lange Akku-Standzeiten gewährleistet, die einen dezentralen Stellantrieb auch ohne Aufladeeinrichtung, beispielsweise mit einer installierten Akku-Kapazität von einer Kilowattstunde, wirtschaftlich ermöglichen. Alternativ genügt ein wirtschaftlich vertretbar dimensionierter dezentraler Energiewandler, um so viel Energie im Mittel bereitzustellen, dass das System aus erfindungsgemäßen Stellantrieb und dezentralem Energiewandler vollständig energieautark arbeitet.

### Ausführungsbeispiel

Zum besseren Verständnis der Erfindung werden im Folgenden viele Aspekte anhand von detaillierten Ausführungsbeispielen mit Bezug auf Abbildungen beschrieben. Es wird jedoch betont, dass diese nicht als limitierend zu verstehen sind, sondern dass die Erfindung alleine durch die Ansprüche definiert ist.
Figur 1 zeigt einen herkömmlichen Stellantrieb mit externer Kommunikationseinheit und Stromnetzanschluss

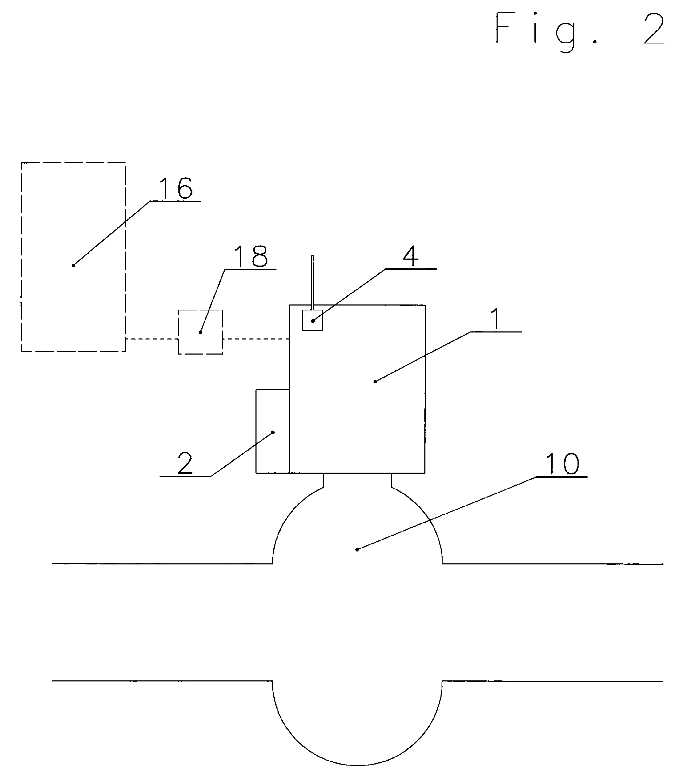

Figur 2 zeigt eine dezentrale Stellvorrichtung gemäß der vorliegenden Erfindung

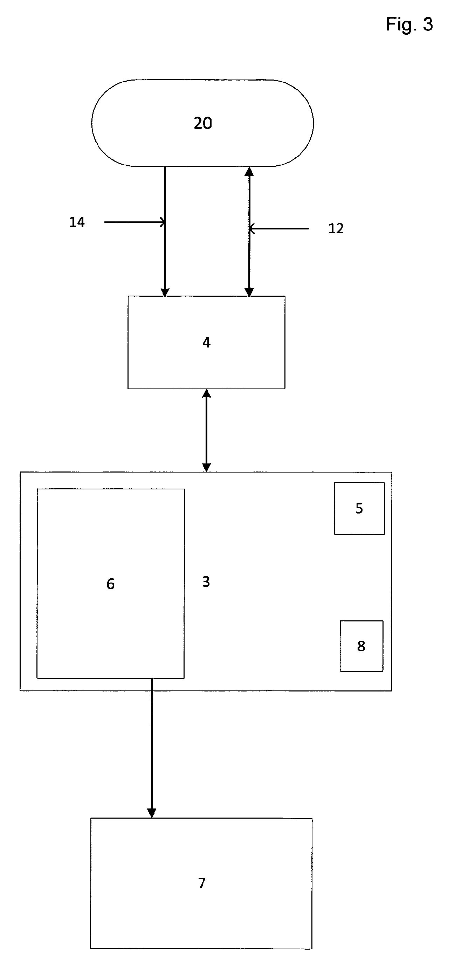

Figur 3 zeigt schematisch den Ablauf der Kommunikation im Ausführungsbeispiel Eine Armatur (10), z.B. eine Armatur (10) im Wasserversorgungsnetz oder anderen Flächenversorgungsnetzen, hat einen elektrischen Stellantrieb (1), der eine Steuerungseinheit (3) bestehend aus der Steuerungselektronik (6) und einer Logikeinheit (5), eine Leistungselektronik (7) und eine Kommunikationseinheit zur drahtlosen Kommunikation (4) umfasst und einen Akkumulator (2) zur Energieversorgung des Stellantriebs.
Es wird zunächst ein erstes Ausführungsbeispiel beschreiben, bei der der dezentrale Stellantrieb (1) dauerhaft erreichbar ist.

Im Standby-Betrieb sind Leistungselektronik (7) und Steuerungselektronik (6) des Stellantriebs (1) spannungs- bzw. stromlos geschaltet. Die Kommunikationseinheit (4) bleibt dagegen empfangsbereit. Als Kommunikationseinheit (4) eignet sich beispielsweise ein GSM/GPRS-Modem, aber auch UMTS oder LTE Modems. Solche Modems können in einem sehr energiesparenden Modus betrieben werden, in welchem sie nur für Weckrufe (bspw. sogenannte. "Paging -Rufe" oder andere Weckrufe) erreichbar bleiben. Ein solcher Weckruf ist eine erste vorbestimmbare Bedingung, welche den Stellantrieb vom Standby-Betrieb in den aktiven Betrieb schaltet: Erhält die Kommunikationseinheit (4) einen solchen Weckruf (14), schaltet sie selbsttätig in den normalen Betriebsmodus und weckt die Steuerungseinheit (3), so dass diese vom Standby in den Normalbetrieb schaltet bei dem die Steuerungselektronik (6) mit Spannung versorgt wird. Die Kommunikationseinheit (4) kann z.B. nach Erhalt eines Weckrufes (14) selbst in den Normalbetrieb schalten, die Steuerungseinheit (3) aus dem Standby-Betrieb wecken, und die Bereitschaft für den Empfang von Steuersignalen (12) senden. Die Kommunikationseinheit (4) empfängt daraufhin kabellos Steuersignale (12) und gibt diese an die Steuerungseinheit (3) weiter. Alternativ kann der Weckruf (12) der Steuerungseinheit (3) lediglich mitgeteilt werden woraufhin die Steuerungseinheit (3) sich selbst und/oder die Kommunikationseinheit (4) in den Normalbetrieb schaltet.

Es ist daneben natürlich auch möglich, die Kommunikationseinheit ständig im voll empfangsbereiten Normalmodus zu betreiben was jedoch zu einem stark erhöhten Standby-Verbrauch führt und deshalb nicht vorzugswürdig ist.

Die Steuerungseinheit (3) ist dazu ausgelegt, den Stellantrieb (1) der Armatur (10) in Abhängigkeit der Steuersignale (12) von der zentralen Kommunikationseinheit (20) zu steuern. Ein häufiger Anwendungsfall ist das Öffnen und Schließen der Armatur (10). Aber auch das Losbrechen einer festsitzenden Armatur (10) oder das Anfahren einer Zwischenstellung der Armatur (10) ist praktisch relevant.

Die elektrische Energie für den Stellantrieb (1) wird aus einem Primär-Akkumulator (2) bereitgestellt. Dieser befindet sich entweder innerhalb des Stellantriebs (1) oder in einem Extragehäuse in der Nähe des Stellantriebs (1). Aufgrund der geringen Selbstentladung werden vorteilhafterweise Li-lonen Akkus verwendet, z.B. mit einer Kapazität von 1 kWh. Die Kommunikationseinheit (4) wird im Ausführungsbeispiel von einer sekundären Li-lon-Zelle mit Energie versorgt. Diese Zelle wird nach Bedarf über einen Schaltregler aus dem Primärakku (2) nachgeladen. Dies hat den Vorteil, dass nicht unnötig viel Energie an den andernfalls notwendigen Spannungsteilern verbraucht wird.

Nach Beendigung einer Stellaufgabe, verweilt der Stellantrieb (1) eine bestimmte Zeit im aktiven Betriebsmodus. Empfängt die Kommunikationseinheit (4) in dieser Zeit keine weiteren Stellaufgaben-Signale (12) schaltet sich die Steuerungseinheit (3) selbständig in den Standby-Modus, bei der die Steuerungselektronik (6) und die Leistungselektronik (7) komplett spannungslos geschaltet sind, und teilt dies der Kommunikationseinheit (4) mit, die daraufhin ebenfalls in einen energiesparenden Betriebsmodus, in welchen sie nur für Weckrufe erreichbar bleibt, schaltet.

Zur Funktion des Aufweckens aus dem Standby-Betriebe, kann die Steuerungseinheit (3) vorteilhafterweise eine Logikeinheit (5) umfassen. Als Logikeinheit (5) kann beispielsweise ein Logikkontroller mit sehr geringem Ruhestrom und 32 I/O Leitungen verwendet werden. Die genaue Anzahl der I/O Leitungen ist jedoch nicht wesentlich. Empfängt die Kommunikationseinheit (4) nun drahtlos einen Weckruf, so wird dies der Logikeinheit (5) mitgeteilt. Die Logikeinheit sorgt daraufhin dafür, dass die Steuerungselektronik mit Spannung versorgt wird, z. B. indem sie eine elektrische Verbindung zum Primär-Akkumulator (2) oder zum Sekundärakku schaltet. Die Steuerungseinheit (3) erhält als nächstes den Stellbefehl von der Kommunikationseinheit (4), z.B. vollständiges Öffnen der Armatur (10), und steuert mithilfe der Leistungselektronik (7) den Stellantrieb (1).

Die Logikeinheit (5) kann statt aus einem Logikkontroller bspw. auch durch einen Steuerungsrechner, einen Mikrokontroller oder einen ASIC gebildet werden. Letztlich ist jedes elektronische Bauteil geeignet, welches direkt oder mittels weiterer elektrischer Bauteile durch ein Signal ausgelöst eine logische Operation auszuführen in der Lage ist, insbesondere die Spannung an der Steuerungselektronik (6) an- und abzuschalten.

Damit werden im Standby-Betrieb einzig die Kommunikationseinheit (4) und die Logikeinheit (5) über einen sekundären Li-lonen Akku mit Spannung versorgt. So bleibt der Antrieb jederzeit erreichbar. Die restliche Elektronik ist spannungslos geschaltet.

In einer alternativen Ausführungsform kann eine Real Time Clock (8) in der Steuerungseinheit (3) vorgesehen sein, die im Standby-Betrieb weiterläuft. Hierdurch kann die Steuerungseinheit (3) periodisch geweckt werden und nach Stellbefehlen über die Kommunikationseinheit (4) fragen. Die Real Time Clock (8) weist vorteilhaft unter 300 µA, noch vorteilhafter unter 50 µA und am meisten bevorzugt 10 µA oder weniger Stromaufnahme auf. Dadurch ist die Erreichbarkeit in Abhängigkeit der Schlafintervalle zwar eingeschränkt, aber auch hiermit ist ein für praktische Fälle relevanter Betrieb möglich. Die Länge der Schlafintervalle kann je nach gewünschter Erreichbarkeit angepasst werden. Vorteilhafterweise kann in beiden Ausführungsformen ein Rückmeldesignal (12) von der Steuerungseinheit (3) über die Kommunikationseinheit (4) versendet werden. Dieses Rückmeldesignal (12) kann z.B. eine Fehlermeldung sein oder die Nachricht über einen erfolgreichen Stellvorgang. Da auch das Versenden von Nachrichten Energie kostet, kann es besonders vorteilhaft sein, wenn nur bei aufgetretenen Fehlern ein Rückmeldesignal (12) versendet wird.

In den Ausführungsbeispielen kann ein speicherprogrammierbares GSM/GPRS-Modem im Stellantrieb (1) integriert und über eine RS232-Schnittstelle mit dessen Steuerungseinheit (3) verbunden sein. In einem alternativen Ausführungsbeispiel kann das GSM/GPRS-Modem als kabellose Kommunikationseinheit (4) außerhalb des Stellantriebs (1) angebracht sein. Das gleiche gilt für die Steuerungseinheit (3), die ganz oder teilweise sowohl intern im Stellantrieb (1) als auch extern angeordnet sein kann. So ist es ebenfalls von der Lehre dieser Erfindung umfasst, dass sich die Logikeinheit (5) außerhalb des Stellantriebs (1) befindet, die Steuerungselektronik (6) dagegen innerhalb des Stellantriebs (1) angeordnet ist.

In weiteren Ausführungsbeispielen kann statt eines GSM-Modems ein Modem zur drahtlosen Kommunikation mittels eines anderen Protokolls bzw. eines anderen Mobilfunkstandars zur Datenübertragung verwendet werden. So sind alternativ ein UMTS- oder LTE-Modem aber auch jedes andere Funkmodem denkbar. Zudem umfasst die Lehre dieser Erfindung, dass die Elektronik mittels der sogenannten Wake-On-On-Lan Technologie oder vergleichbarer Techniken spannungslos geschaltet oder spannungsversorgt geschaltet wird.

In den dargestellten Ausführungsbeispielen ist es möglich, den Standby-Verbrauch des gesamten Antriebes auf 15 mW zu beschränken. Damit ist die Stromversorgung der erfindungsgemäßen elektrischen Stellvorrichtung im Stellbetrieb von über einem Jahr durch einen Akkumulator mit einer Kapazität von bspw. einer Kilowattstunde ohne Nachladen bei ständiger oder intervallmäßiger Erreichbarkeit möglich.

Der Einsatz hochwertiger Akkumulatoren (2) mit geringen Entladeströmen erlaubt es, dezentrale Energiewandler (16) mit kleinen Ausgangsleistungen zum Laden der Akkus (2), bspw. Li-Ionen Akkus, zu verwenden. Durch diese Maßnahme kann die Standzeit der Akkus entweder weiter verlängert werden, oder die Energiewandler können schon bei wirtschaftlich vertretbarer Dimensionierung den vollen mittleren Energiebedarf der erfindungsgemäßen Stellvorrichtung sicherstellen und so zusammen mit der erfindungsgemäßen Stellvorrichtung vollständig energieautark eine beliebige Armatur (10) in den genannten Anwendungsfällen automatisieren.

Als Energiewandler (16) kommen beispielsweise Solarpaneele, Windgeneratoren, Turbinen innerhalb der Rohrleistung oder Thermogeneratoren auf Basis des Seebeck-Effektes in Frage.

Der Energiewandler (16) sollte im Mittel mindestens den Standby-Verbrauch der erfindungsgemäßen dezentralen Stellvorrichtung, die durchschnittlich zum Stellen der Armatur (10) benötigte Energie sowie alle Verluste bereitstellen. Durch die erfindungsgemäße Lösung ist die Bereitstellung von fünf Watt, bevorzugt von 1 Watt und besonders bevorzugt von 500 Milliwatt oder darunter durch den Energiewandler im Mittel ausreichend. Eine Stellung der Armatur (10) belastet zwar den Primär-Akku (2) kurzzeitig mit hohen Leistungen und der Entnahme von einigen Hundert oder auch Tausenden von Watt, diese können jedoch durch niedrige, aber kontinuierliche Zufuhr ersetzt werden, wenn die Zeitintervalle zwischen Stellvorgängen ausreichend groß sind.

Da dezentrale Energiewandler (16) bei wirtschaftlicher Dimensionierung typischerweise nur kleine Leistungen liefern können, ist es vorteilhaft, wenn eine Vorrichtung zur gepulsten Aufladung (18) der Primärakkus (2) vorgesehen ist. Viele Arten von Akkus, insbesondere die vorzugsweise verwendeten Li-Ionen Akkus, müssen mit einem Mindeststrom geladen werden, der von den genannten Energiewandlern nicht bereitgestellt werden kann. Die Energie aus dem Energiewandler wird durch die Vorrichtung zur gepulsten Aufladung über einen Puffer gepulst in die Primär-Akkus abgegeben.

Der Kommunikationsablauf zum Betreiben der dezentralen Stellvorrichtung läuft im Ausführungsbeispiel wie folgt:
- Weckruf der Zentrale (20) wird dem GSM-Modem im Standby-Betrieb übermittelt
- Weckruf wird der Logikeinheit (5) signalisiert
- Logikeinheit (5) sorgt dafür, dass Steuerungselektronik (6) mit Spannung versorgt wird und die Steuerungseinheit (3) dadurch aktiviert wird
- Steuerungseinheit (3) erhält von der Kommunikationseinheit (4) Stellanforderung der Zentrale
- Steuerungselektronik (6) realisiert mittels Leistungselektronik (7) Stellung der Armatur (10)
- Stellungsrückmeldungen werden von der Steuerungseinheit (3) über die Kommunikationseinheit (4) an die Zentrale gemeldet
- Nach Ablauf einer bestimmten Zeit ohne Stellbefehl von der Zentrale schalten

Steuerungseinheit (3) und Kommunikationseinheit (4) wieder in den Standby-Betrieb Im Rahmen der Ausführungsbeispiele wurde bis jetzt meistens als zweite vorbestimmbare Bedingung eine vorbestimmte Zeit ohne Stellanforderung angegeben, nach der sich die dezentrale Stellvorrichtung in den Standby-Betrieb versetzt. Es sind hier jedoch eine Reihe anderer Bedingungen möglich. So ist es denkbar, dass bei Auftreten eines Fehlers, sei es bei der Kommunikation oder beim Ausführen des Stellbefehls, die Zeit länger gewählt ist als bei einem fehlerlosen Ausführen des Stellbefehls oder einem korrekten Empfang eines Stellkommandos. Auch können in Abhängigkeit der Stellbefehle andere Zeiten gewählt werden, beispielsweise eine kurze Zeit bei einem Routine-Stellbefehl, aber eine lange Bereitschaftszeit bei einer Notabschaltung. Der Standby-Betrieb kann aber auch auf direkten übermittelten Befehl einer Leitzentrale eingenommen werden. Auch ist es denkbar bei langen Perioden ohne Stellanforderung den Standby-Betrieb zu verlassen und eine Meldung als eine Art Lebenszeichen an die Zentrale zu verschicken.

Es kann weiterhin implementiert sein, dass die Stellvorrichtung auf Signale von Sensoren, wie z.B. Drucksensoren oder Durchflusssensoren oder Feuchtesensoren oder Gassensoren reagiert und so beispielsweise eine Notabschaltung im Rahmen eines Havariekonzeptes möglich macht.

Weiter ist es auch möglich, lokal in der Steuerungseinheit (3) die Stellmomente zu loggen, z.B. durch eine Kennlinie, die Stellmoment und momentanen Leistungsverbrauch zueinander in Bezug stellt. Auch die Aufzeichnung von Drehmoment-Weg-Kennlinien ist von praktischer Bedeutung, da hierdurch eine zustandsorientierte Wartung möglich wird, d.h. es wird ermöglicht auf eine periodische Wartung zu verzichten und stattdessen eine Armatur nur zu warten, wenn diese tatsächlich nötig wird, bzw. bevor die Wartung unverhältnismäßig aufwändig wird. Z.B. kann ein Stellmoment, welches über einem Grenzwert liegt

(Schwellwertbetrachtung), bzw. über mehrere Stellbefehle immer größer wurde (Trendbetrachtung), an die Zentrale zurückgemeldet werden. Dort wird erkannt, dass eine Wartung nötig ist und es kann ein Wartungsstellbefehl an den dezentralen Stellantrieb (1) geschickt werden, bei dem beispielsweise eine als wartungsbedürftig erkannte Armatur (10) solange geöffnet und geschlossen wird, bis das Stellmoment wieder abnimmt, oder unterhalb eines Grenzwertes fällt. Alternativ kann die Steuerungseinheit (3) selbst die Schwellwert- und Trennbetrachtung durchführen. Wird die Armatur als wartungsbedürftig erkannt, wird die Stellvorrichtung erst wieder in den Standby-Betrieb zu versetzen, nachdem eine Wartungsanforderung an die Zentrale versandt wurde. Es sind aber auch Stell-Zustandssignale möglich, bei denen lediglich eine Spindelposition oder ein Kugelhahnposition übermittelt wird.

Es sei nochmals darauf hingewiesen, dass die hier genannten Ausführungsbeispiele unter Angabe vieler Details zum erleichterten Verständnis und zu einer umfangreichen Beschreibung der Erfindung angegeben wurden. Diese Details sind jedoch nicht als einschränkend aufzufassen. Die Erfindung für die Schutz begehrt wird, ist stattdessen ausschließlich in den angehängten Ansprüchen definiert.

## Patentansprüche

1. Dezentrale und kabellose Stellvorrichtung für Armaturen (10) in Rohrleitungen, wobei die Stellvorrichtung einen elektrischen Stellantrieb (1), einen Akkumulator (2) zur Energieversorgung, eine Steuerungseinheit (3) und eine Kommunikationseinheit (4) aufweist, wobei die Kommunikationseinheit (4) zur kabellosen bidirektionalen Kommunikation eingerichtet ist wobei die Kommunikationseinheit (4) zumindest ein GSM Modem und/oder ein UMTS Modem und/oder ein LTE Modem aufweist, wobei die Stellvorrichtung eingerichtet ist, in einem Standby Betrieb und einem aktiven Betrieb zu arbeiten,
wobei sie im Standby Betrieb im Wesentlichen strom- bzw. spannungslos geschaltet ist und die Kommunikationseinheit (4) in einem energiesparenden Modus betrieben wird, in dem sie nur für Weckrufe erreichbar bleibt, wodurch der Energieverbrauch der gesamten Stellvorrichtung im Standby-Betrieb kleiner als 5 Watt, bevorzugt kleiner als 1 Watt. besonders bevorzugt kleiner als 50 Milliwatt ist, insbesondere bevorzugt kleiner als 15 Milliwatt ist, und
und wobei sie im aktiven Betrieb eingerichtet ist, den Stellantrieb (1) in Abhängigkeit von über die Kommunikationseinheit (4) empfangenen Steuersignalen zu steuern und
wobei die Steuerungseinheit (3) weiter eingerichtet ist, die Stellvorrichtung infolge einer ersten vorbestimmbaren Bedingung vom Standby-Betrieb in den aktiven Betrieb und infolge einer zweiten vorbestimmbaren Bedingung aktivem Betrieb in den Standby-Betrieb zu schalten, wobei die erste vorbestimmbare Bedingung zum Schalten vom Standby-Betrieb in den aktiven Betrieb das Empfangen eines Weckrufs an der Kammunikationseinheit (4) ist.

2. Dezentrale und kabellose Stellvorrichtung nach Ansprch 1, wobei die erste vorbestimmbare Bedingung zum Schalten vom Standby-Betrieb in den aktiven Betrieb das Verweilen der Steuerungseinheit (3) während einer vorbestimmbare Zeit im Standby-Betrieb ist.

3. Dezentrale und kabellose Stellvorrichtung nach Anspruch 1 oder 2, wobei die zweite vorbestimmbare Bedingung zum Schalten vom aktiven in den Standby Betrieb eine vorbestimmbare Zeit im aktiven Modus ohne Empfang eines Steuersignals an der Kommunikationseinheit (4) ist.

4. Dezentrate und kabellose Stellvorrichtung nach Anspruch 1 -3, wobei die zweite vorbestimmbare Bedingung zum Schalten vom aktiven in den Standby-Betrieb der Empfang eines zweiten vorbestimmbaren Signals an der Kommunikationseinheit (4) ist.

5. Dezentrale und kabellose Stellvorrichtung nach einem der Ansprüche 1-4, wobei die Stellvorrichtung weiterhin eine Aufladeeinheit zum Aufladen des Akkumulators (2) aufweist.

6. Dezentrale und kabeilose Stellvorrichtung nach Anspruch 5, wobei die Aufladeeinheit einen dezentralen Energiewandler (16) in Form eines thermoelektrischen Generators und/oder eines Solarpanels und/oder ein Windgenerators und/oder eines Generators, der die Bewegungsenergie des Mediums in der Rohrleitung in elektrische Energie wandeln kann, und/oder einer Brennstoffzelle aufweist.

7. Dezentrale und kabellose Stellvorrichtung nach einem der Ansprüche 1-6, wobei der Akkumulator (2) zumindest einen Lithium-lonen-Akkumulator mit geringer Selbstentladung von weniger als 20% pro Monat, bevorzugt weniger als 5% pro Monat und besonders bevorzugt weniger als 1 % pro Monat bei 20° Celsius aufweist.

8. Dezentrale und kabellose Stellvorrichtung nach einem der Ansprüche 5-7, wobei die Aufladeeinrichtung eine Vorrichtung zu gepulsten Aufladung (18) umfasst, welche eingerichtet ist. Energie zum Aufladen des Akkumulators (2) zu speichern und gepulst an den Akkumulator (2) abzugeben.

9. Dezentrale und kabellose Stellvorrichtung nach einem der Ansprüche 1-8, wobei der Akkumulator (2) innerhalb des Stellantriebs (1) angeordnet ist.

10. Dezentrale und kabellose Stellvorrichtung nach einem der Ansprüche 1-8, wobei der Akkumulator (2) außerhalb des Stellantriebs (1) angeordnet ist.

11. Dezentrale und kabellose Stellvorrichtung nach einem der Ansprüche 1-10, wobei die Kommunikationseinheit (4) zur kabellosen bidirektionalen Kommunikation ganz oder teilweise innerhalb des Stellantriebs (1) angeordnet ist.

12. Dezentrale und kabellose Stellvorrichtung nach einem der Ansprüche 1-10, wobei die Kommunikationseinheit (4) zur kabellosen bidirektionalen Kommunikation ganz oder teilweise außerhalb des Stellantriebs (1) angeordnet ist.

13. Dezentrale und kabellose Stellvorrichtung nach einem der Ansprüche 1-12, wobei die Steuerungseinheit (3) ganz oder teilweise innerhalb des Stellantriebs (1) angeordnet ist.

14. Dezentrale und kabellosen Stellvorrichtung nach einem der Ansprüche 1-12. wobei die Steuerungseinheit (3) ganz oder teilweise außerhalb des Stellantriebs (1) angeordnet ist.

15. Verfahren zum Steuern einer Armatur in Rohrleitungen mit einer dezentralen und kabellosen Stellvorrichtung nach einem der Ansprüche 1-14, welchesfolgende Schritte aufweist
i) Umschalten der Stellvorrichtung vom Standby-Betrieb in den aktiven Betrieb infolge des Vorliegens einer ersten vorbestimmbaren Bedingung
ii) Durchführung eines mit der Kommunikationseinheit (4) empfangenen Steuerbefehls, insbesondere einer übermittelten Stellanforderung, durch den elektrischen Stellantrieb (1)
iii) Umschalten der Stellvorrichtung vom aktiven Betrieb in den Standby-Betrieb infolge einer zweiten vorbestimmbaren Bedingung.

16. Verfahren nach Anspruch 15 zum Steuern einer Armatur in Rohrleitungen mit einer dezentralen und kabellosen Steuereinrichtung nach einem der Ansprüche 1-14, wobei die erste vorbestimmbare Bedingung das Verweilen der Stellvorrichtung während einer vorbestimmten Zeit im Standby-Betrieb ist oder der Empfang eines ersten vorbestimmbaren Signals an der Kommunikationseinheit (4) ist.

17. Verfahren nach Anspruch 15 oder 16 zum Steuern einer Armatur in Rohrleitungen mit einer dezentralen und kabellosen Steuereinrichtung nach einem der Ansprüche 1-14, wobei die zweite vorbestimmbare Bedingung das Verweilen der Stellvorrichtung während einer vorbestimmbaren Zeit im aktiven Modus ohne Empfang eines Signals durch die Kommunikationseinheit (4) oder der Empfang durch die Kommunikationseinheit (4) eine zweiten vorbestimmbaren Signals ist.

18. Verfahren nach einem der Ansprüche 15-17, mit dem zusätzlichen Schritt iia) zwischen den Schritten ii) und iii) des Bereitstellens eines Rückmeldesignals (12) über die Kommunikationseinheit (4).

19. Verwendung einer dezentralen und kabellosen Stellvorrichtung für Armaturen gemäß einem der Ansprüche 1-14 in Rohrleitungen der Wasser-, Gas-, Fernwärme und Fernkälteversorgung der Abwasserentsorgung sowie des Öl- und Gastransports.

## Claims

1. Decentralised and wireless setting device for valves (10) in pipelines, in which the setting device features an electric actuator (1), a rechargeable battery (2) for power supply, a control unit (3) and a communication unit (4), and in which the communication unit (4) is set up for wireless bidirectional communication and the communication unit (4) features at least a GSM modem and/or a UMTS modem and/or an LTE modem, and in which the setting device is set up to operate in a standby and an active mode,
in which in standby mode it is switched essentially to no current / no voltage and the communication unit (4) operates in an energy-saving mode in which it is only reachable for wake-up calls, due to which the energy consumption of the whole setting device in standby mode is less than 5 watt, preferably less than 1 watt, particularly preferably less than 50 milliwatt, most preferably less than 15 milliwatt, and
in which in the active mode it is set up to control the actuator (1) according to controlling signals received via the communication unit (4), and
in which the control unit (3) is set to switch the setting device from standby mode to active mode due to a first pre-definable condition, and from active mode to standby mode due to a second pre-definable condition, in which the first pre-definable condition for switching from standby mode to active mode is the reception of a wake-up call via the communication unit (4).

2. Decentralised and wireless setting device according to claim 1, in which the first pre-definable condition for switching from standby mode to active mode is the control unit (3) remaining in standby mode for a pre-definable period.

3. Decentralised and wireless setting device according to claim 1 or 2, in which the second pre-definable condition for switching from active to standby mode is a pre-definable period in active mode without receiving a control signal via the communication unit (4).

4. Decentralised and wireless setting device according to claims 1-3, in which the second pre-definable condition for switching from active to standby mode is the reception of a second pre-definable signal via the communication unit (4).

5. Decentralised and wireless setting device according to one of the claims 1-4, in which the setting device also features a charging unit for recharging the battery (2).

6. Decentralised and wireless setting device according to claim 5, in which the charging unit features a decentralised energy converter (16) in the form of a thermoelectric generator and/or a solar panel and/or a wind turbine and/or a generator that is able to convert the kinetic energy of the medium in the pipeline to electrical energy and/or a fuel cell.

7. Decentralised and wireless setting device according to one of the claims 1-6, in which the rechargeable battery (2) features at least a lithium-ion battery with low self-discharge of less than 20% per month, preferably less than 5% per month and particularly preferably less than 1% per month at 20° Celsius.

8. Decentralised and wireless setting device according to one of the claims 5-7, in which the charging unit comprises a device for pulsed charging (18) that is set up to store energy for charging the battery (2) and to yield it to the battery (2) in a pulsed mode.

9. Decentralised and wireless setting device according to one of the claims 1-8, in which the rechargeable battery (2) is positioned inside the actuator (1).

10. Decentralised and wireless setting device according to one of the claims 1-8, in which the rechargeable battery (2) is positioned outside the actuator (1).

11. Decentralised and wireless setting device according to one of the claims 1-10, in which the communication unit (4) for wireless bidirectional communication as a whole or parts thereof are positioned inside the actuator (1).

12. Decentralised and wireless setting device according to one of the claims 1-10, in which the communication unit (4) for wireless bidirectional communication as a whole or parts thereof are positioned outside the actuator (1).

13. Decentralised and wireless setting device according to one of the claims 1-12, in which the control unit (3) as a whole or parts thereof are positioned inside the actuator (1).

14. Decentralised and wireless setting device according to one of the claims 1-12, in which the control unit (3) as a whole or parts thereof are positioned outside the actuator (1).

15. Process for controlling valves in pipelines with a decentralised and wireless setting device according to one of the claims 1-14, featuring the following steps:
i) Switching the setting device from standby mode to active mode due to the presence of a first pre-definable condition
ii) Execution of a control command received via the communication unit (4), particularly of a transmitted actuation request, by the electric actuator (1)
iii) Switching of the setting device from active mode to standby mode due to a second pre-definable condition.

16. Process according to claim 15 for controlling valves in pipelines with a decentralised and wireless setting device according to one of the claims 1-14, in which the first pre-definable condition is the setting device's remaining in standby mode for a pre-definable period or the reception of a first pre-definable signal via the communication unit (4).

17. Process according to claim 15 or 16 for controlling valves in pipelines with a decentralised and wireless setting device according to one of the claims 1-14, in which the second pre-definable condition is the setting device's remaining in active mode for a pre-definable period without receiving a signal via the communication unit (4) or the reception a second pre-definable signal via the communication unit (4).

18. Process according to one of the claims 15-17, with the additional step iia) between steps ii) and iii) of providing a feedback signal (12) via the communication unit (4).

19. Use of a decentralised and wireless setting device for valves according to one of the claims 1-14 in pipelines for water, gas, district heat and district cooling supply, sewage disposal as well as oil and gas transportation.

## Revendications

1. Dispositif de positionnement décentralisé et sans fil pour les armatures (10) dans la tuyauterie, dans lequel le dispositif de positionnement comporte une commande d'actionnement électrique (1), une batterie (2) fournissant l'énergie, une unité de commande (3) et une unité de communication (4), l'unité de communication (4) étant configurée pour une communication sans fil bidirectionnelle et l'unité de communication (4) disposant au moins d'un modem GSM et/ou d'un modem UMTS et/ou d'un modem LTE, et le dispositif de positionnement étant configuré pour fonctionner en mode veille et en mode actif,
lorsqu'il est en mode veille essentiellement sans courant ou hors tension et que l'unité de communication (4) est en mode économie d'énergie, c'est-à-dire qu'il ne reste joignable que pour les réveils, et où l'utilisation d'énergie de l'ensemble du dispositif de positionnement en mode veille est inférieure à 5 W, de préférence inférieure à 1 W, de préférence particulièrement inférieure à 50 mW, de préférence plus particulièrement inférieure à 15 mW, et
et étant configuré en mode actif, pour contrôler la commande d'actionnement (1) dépendamment des signaux de commande reçus par l'unité de communication (4) et
l'unité de commande (3) étant configurée pour commuter le dispositif de positionnement suivant une première condition prédéfinie, du mode veille au mode actif, et suivant une deuxième condition prédéfinie, du mode actif au mode veille, la première condition prédéfinie de commutation du mode veille au mode actif étant la réception d'un réveil à l'unité de communication (4).

2. Le dispositif de positionnement décentralisé et sans fil selon la revendication 1, la première condition prédéfinie de commutation du mode veille au mode actif étant le maintien de l'unité de commande (3) pendant un temps prédéfini en mode veille.

3. Le dispositif de positionnement décentralisé et sans fil selon la revendication 1 ou 2, la deuxième condition prédéfinie de commutation du mode actif au mode veille étant un temps prédéfini en mode actif sans réception d'un signal de commande à l'unité de communication (4).

4. Le dispositif de positionnement décentralisé et sans fil selon les revendications 1 -3, la deuxième condition prédéfinie de commutation du mode actif au mode veille étant la réception d'un deuxième signal prédéfini à l'unité de communication (4).

5. Le dispositif de positionnement décentralisé et sans fil selon les revendications 1 -4, le dispositif de positionnement présentant en outre une unité de charge pour le chargement de la batterie (2).

6. Le dispositif de positionnement décentralisé et sans fil selon la revendication 5, l'unité de charge présentant un convertisseur d'énergie décentralisé (16) sous la forme d'un générateur thermoélectrique et/ou d'un panneau solaire et/ou d'une éolienne et/ou d'un générateur qui peut transformer l'énergie cinétique du milieu dans la tuyauterie en énergie électrique, et/ou d'une pile à combustible.

7. Le dispositif de positionnement décentralisé et sans fil selon les revendications 1-6, la batterie (2) présentant au moins un batterie lithium-ion à faible autodécharge inférieure à 20 % par mois, de préférence moins de 5 % par mois et de préférence particulièrement moins d'1 % par mois à 20 °Celsius.

8. Le dispositif de positionnement décentralisé et sans fil selon l'une des revendications 5-7, le moyen de charge comprenant un dispositif de charge pulsée (18), qui est équipé pour stocker l'énergie pendant la charge de la batterie (2) et la restituer de façon pulsée à la batterie (2).

9. Le dispositif de positionnement décentralisé et sans fil selon l'une des revendications 1-8, la batterie (2) étant disposée à l'intérieur de la commande d'actionnement (1).

10. Le dispositif de positionnement décentralisé et sans fil selon l'une des revendications 1-8, la batterie (2) étant disposée à l'extérieur de la commande d'actionnement (1).

11. Le dispositif de positionnement décentralisé et sans fil selon l'une des revendications 1-10, l'unité de communication (4) étant disposée entièrement ou partiellement à l'intérieur de la commande d'actionnement (1) pour la communication sans fil bidirectionnelle.

12. Le dispositif de positionnement décentralisé et sans fil selon l'une des revendications 1-10, l'unité de communication (4) étant disposée entièrement ou partiellement à l'extérieur de la commande d'actionnement (1) pour la communication sans fil bidirectionnelle.

13. Le dispositif de positionnement décentralisé et sans fil selon l'une des revendications 1-12, l'unité de commande (3) étant disposée entièrement ou partiellement à l'intérieur de la commande d'actionnement (1).

14. Le dispositif de positionnement décentralisé et sans fil selon l'une des revendications 1-12, l'unité de commande (3) étant disposée entièrement ou partiellement à l'extérieur de la commande d'actionnement (1).

15. Procédé de commande d'une armature dans la tuyauterie avec un dispositif de positionnement décentralisé et sans fil selon l'une des revendications 1-14, qui présente les mesures suivantes :
i) commutation du dispositif de positionnement du mode veille au mode actif suivant l'existence d'une première condition prédéfinie
ii) exécution d'une instruction de contrôle reçu par l'unité de communication (4), en particulier d'un ordre de positionnement transmis par la commande d'actionnement (1) électrique
iii) commutation du dispositif de positionnement du mode actif au mode veille suivant l'existence d'une deuxième condition prédéfinie.

16. Procédé selon la revendication 15 de commande d'une armature dans la tuyauterie avec un dispositif de commande décentralisé et sans fil selon l'une des revendications 1-14, la première condition prédéfinie étant le maintien du dispositif de positionnement pendant un temps prédéfini en mode veille ou étant la réception d'un premier signal prédéfini à l'unité de communication (4).

17. Procédé selon la revendication 15 ou 16 de commande d'une armature dans la tuyauterie avec un dispositif de commande décentralisé et sans fil selon l'une des revendications 1-14, la deuxième condition prédéfinie étant le maintien du dispositif de positionnement pendant un temps prédéfini en mode actif sans réception d'un signal par l'unité de communication (4) ou étant la réception d'un deuxième signal prédéfini par l'unité de communication (4).

18. Procédé selon l'une des revendications 15-17, avec la mesure supplémentaire iia) entre les mesures ii) et iii) de la mise en place d'un signal de confirmation (12) par l'unité de communication (4).

19. L'utilisation d'un dispositif de positionnement décentralisé et sans fil pour les armatures selon l'une des revendications 1-14 dans la tuyauterie d'approvisionnement en eau, gaz, réseau de chaleur et réseau de froid, de l'évacuation des eaux usées ainsi que de l'acheminement du pétrole et du gaz.
